(19)

Europäisches Patentamt
European Patent Office
Office européen des brevets

(11) **EP 2 740 761 B1**

(12) **EUROPEAN PATENT SPECIFICATION**

(45) Date of publication and mention
of the grant of the patent:
**19.10.2016 Bulletin 2016/42**

(51) Int Cl.:
***C08L 23/06*** (2006.01)     ***C08L 23/08*** (2006.01)
***F16L 9/12*** (2006.01)

(21) Application number: **12008142.7**

(22) Date of filing: **05.12.2012**

(54) **POLYETHYLENE COMPOSITION WITH IMPROVED BALANCE OF SLOW CRACK GROWTH RESISTANCE, IMPACT PERFORMANCE AND PIPE PRESSURE RESISTANCE FOR PIPE APPLICATIONS**

POLYETHYLENZUSAMMENSETZUNG MIT VERBESSERTEM GLEICHGEWICHT ZWISCHEN BESTÄNDIGKEIT GEGEN LANGSAMES RISSWACHSTUM, EINFLUSSLEISTUNG UND ROHRDRUCKBESTÄNDIGKEIT FÜR ROHRANWENDUNGEN

COMPOSITION DE POLYÉTHYLÈNE PRÉSENTANT UN ÉQUILIBRE AMÉLIORÉ DE RÉSISTANCE À LA PROPAGATION DES FISSURES LENTES, LA RÉSISTANCE AUX CHOCS ET UNE RÉSISTANCE À LA PRESSION DES TUYAUX POUR DES APPLICATIONS DE TUYAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.06.2014 Bulletin 2014/24**

(73) Proprietor: **Borealis AG**
**1220 Vienna (AT)**

(72) Inventors:
• **Tynys, Antti**
**4020 Linz (AT)**

• **Braun, Juliane**
**4040 Linz (AT)**
• **Rätzsch, Thomas**
**4203 Altenberg (AT)**

(74) Representative: **Kador & Partner**
**Corneliusstraße 15**
**80469 München (DE)**

(56) References cited:
**EP-A1- 1 909 014     EP-A1- 2 072 587**
**WO-A1-03/087199     WO-A1-2010/049167**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present application concerns a polyethylene composition comprising a multimodal base resin having a weight average molecular weight (Mw) of from 190,000 g/mol to 300,000 g/mol and a complex viscosity at 0.05 rad/s ($\eta^*_{0.05\ rad/s}$) of 75 to 500 kPa·s, a process for producing said polyethylene composition, an article, preferably a pipe, comprising said base resin and the use of the polyethylene composition for the production of an article, preferably a pipe.

Pipes constructed from polymer materials have a multitude of uses, such as fluid transport, i.e. the transport of liquids and gases, e.g. water or natural gas. During transport, it is normal for the fluid to be pressurized. Moreover, the transported fluid may have varying temperatures, usually within the range from 0°C to 50°C. Such pressurized pipes are preferably constructed from polyolefin plastics, usually unimodal or bimodal ethylene plastics such as medium density polyethylene (MDPE; density: 930-942 kg/m³) and high density polyethylene (HDPE; density: 942-965 kg/m³).

The expression "pressure pipe" used herein refers to a pipe which, when used, is subjected to a positive pressure, that is the pressure inside the pipe being higher than the pressure outside the pipe.

Polymeric pipes are generally manufactured by extrusion, or, to a small extent, by injection moulding. A conventional plant for extrusion of polymer pipes comprises an extruder, a die-head, a calibrating device, cooling equipment, a pulling device, and a device for cutting and/or for coiling up the pipe.

The manufacture of polyethylene materials for use in pressure pipes is discussed in an article by Scheirs et al (Scheirs, Böhm, Boot and Leevers: PE100 Resins for Pipe Applications, TRIP Vol. 4, No. 12 (1996) pp. 408-415). The authors discuss the production technology and properties of PE100 pipe materials. They point out the importance of proper comonomer distribution and molecular weight distribution in order to optimize slow crack growth and rapid crack propagation.

EP 0 739 937 discloses a pipe having improved properties. The pipe is made of a bimodal polyethylene resin, and has specified stress cracking resistance, impact strength and stiffness. The publication discloses that the material should have an $MFR_5$ not being higher than 0.35 g/10 min.

EP 1 920 179 discloses a multimodal polyethylene composition comprising three polyethylene fractions with different molecular weight which is suitable for the production of pipes with good mechanical properties in regard of environmental stress crack resistance, long term mechanical strength and processing behavior.

Whilst properties of conventional polymer pipes are sufficient for many purposes, enhanced properties may also be desired, for instance in applications requiring high pressure resistance, i.e. pipes that are subjected to an internal fluid pressure for long and/or short periods of time.

According to ISO 9080 polyethylene pipes are classified by their minimum required strength, i.e. their capability to withstand different hoop stresses during 50 years at 20°C without fracturing. Thereby, pipes withstanding a hoop stress of 8.0 MPa (MRS8.0) are classified as PE80 pipes, and pipes withstanding a hoop stress of 10.0 MPa (MRS10.0) are classified as PE100 pipes. The next evolutionary step in polyethylene pipe development will be PE125 pipes withstanding a hoop stress of 12.5 MPa (MRS12.5). For increasing the hoop stress multimodal polyethylene resins with increasing density are used. However, the density of a polyethylene resin is directly connected with its crystallinity. The higher the crystallinity of a polyethylene resin the lower its slow crack growth resistance and the lower the impact properties. On the other hand a high crystallinity is connected with a high stiffness and therefore good tensile properties.

US 6,770,341, US 7,345,113 and EP 1460105 disclose bimodal polyethylene compositions for the production of pipes meeting the PE125 requirements which due to the high density of the base resin show inferior slow crack growth resistance.

There is still a need for polyethylene compositions for the production of pipes which show a high pipe pressure resistance and at the same time improved slow crack growth resistance and impact performance.

The present invention therefore relates to a multimodal polyethylene composition comprising a base resin which comprises a low molecular weight ethylene homo- or copolymer fraction (A) and a high molecular weight ethylene homo- or copolymer fraction (B), wherein fraction (A) has a lower average molecular weight as fraction (B), characterized in that the base resin has a weight average molecular weight (Mw) of from 190,000 g/mol to 300,000 g/mol, determined by GPC according to ISO 16014-4:2003 and ASTM D 6474-99, a complex viscosity at 0.05 rad/s ($\eta^*_{0.05\ rad/s}$) of 75 to 500 kPa·s and a shear thinning index, being the ratio of the complex viscosities at a shear stress 2.7 kPa and at a shear stress of 210 kPa, ($SHI_{2.7/210}$) of 10 to 60, $\eta^*_{0.05\ rad/s}$ and $SHI_{2.7/210}$ being determined by dynamic shear measurements according to ISO 6721-1 and ISO 6721-10, and

the composition has a melt flow rate at a load of 21.6 kg ($MFR_{21}$) of equal to or less than 7.0 g/10 min, determined according to ISO 1133 at a temperature of 190°C and a load of 21.6 kg.

It has surprisingly been found that by selecting a base resin having a weight average molecular weight (Mw) of from 190,000 g/mol to 300,000 g/mol and a complex viscosity at 0.05 rad/s ($\eta^*_{0.05\ rad/s}$) of 75 to 500 kPa·s, the polyethylene composition shows a high pressure resistance in an pressure resistance test according to ISO 1167-1:2006 and good tensile properties according to according to ISO 527-1. At the same time the polyethylene composition surprisingly show improved slow crack growth resistance e.g. slow crack propagation resistance according to the PENT test procedure according to ASTM F 1473 and good impact properties, e.g. in the Charpy Notched Impact test according to ISO 179/1eA, especially at low and very low temperatures of 0°C to -40°C.

Usually, a polyethylene composition comprising at least two polyethylene fractions, which have been produced under different polymerisation conditions resulting in different (weight average) molecular weights and/or different comonomer contents for the fractions, is referred to as "multimodal". The prefix "multi" relates to the number of different polymer fractions the composition is consisting of. Thus, for example, a composition consisting of two fractions only is called "bimodal", whereas a composition consisting of three fractions only is called "trimodal".

Thereby the term "different" means that the polyethylene fractions differ from each other in at least one property, preferably in the weight average molecular weight or comonomer content or both.

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

Preferably, the polyethylene composition according to the invention is a multimodal polyethylene composition, more preferably a bimodal polyethylene composition. Preferably, the base resin consists of the two ethylene homo- or copolymer fractions (A) and (B), whereby optionally a prepolymer fraction adds to the ethylene homo- or copolymer fraction (A).

The term "base resin" means the entirety of polymeric components in the polyethylene composition according to the invention, usually making up at least 90 wt% of the total composition.

Preferably, the fractions (A) and (B) differ in their comonomer content.

Fraction (A) may be an ethylene homopolymer or the ethylene copolymer with the lowest comonomer content of the fractions (A) and (B). It is preferred that fraction (A) is an ethylene homopolymer.

An ethylene homopolymer thereby denotes a polymer consisting essentially of ethylene monomer units. Due to the requirements of large-scale polymerization it may be possible that the ethylene homopolymer includes minor amounts of comonomer units, which usually is below 0.1 mol%, preferably below 0.05 mol%, most preferably below 0.01 mol% of the ethylene homopolymer.

Fraction (A) further preferably has a melt flow rate $MFR_2$ of at least 50 g/10 min, more preferably at least 75 g/10 min, and most preferably at least 100 g/10 min.

The upper limit of the melt flow rate $MFR_2$ of fraction (A) is preferably 450 g/10 min, more preferably 400 g/10 min, still more preferably 350 g/10 min and most preferably 300 g/10 min.

The $MFR_2$ of fraction (A) can be directly determined in the case fraction (A) is polymerized separately or as first fraction of the inventive composition. In the case fraction (A) is polymerized as the second or third fraction of the inventive composition the $MFR_2$ of fraction (A) can be calculated according to the equation developed by Hagström and coworkers in B. Hagström: Prediction of melt flow rate (MFR) of bimodal polyethylenes based on MFR of their components, in: Conference on Polymer Processing (The Polymer Processing Society), Extended Abstracts and Final Programme, Gothenburg, August 19-21, 1997, 4:13. Thereby, fractions (B) of the inventive composition will be treated as second fraction.

Fraction (A) preferably has a density of 970 kg/m$^3$ or more.

Fraction (B) can be an ethylene homopolymer or an ethylene copolymer. It is preferred that fraction (B) is a copolymer of ethylene and at least one alpha-olefin comonomer. The alpha-olefin conomoner preferably is selected from alpha-olefin conomoners with 3 to 12 carbon atoms, more preferably 4 to 8 carbon atoms. Suitable alpha-olefin comonomer species are 1-butene, 1-hexene and 1-octene. 1-butene and 1-hexene are mostly preferred.

Fraction (B) and optionally fraction (A) can include the same or different alpha-olefin comonomers. It is thereby preferred that all comonomer fractions include the same alpha-olefin comonomer(s).

Preferably, fraction (B) has a higher comonomer content as fraction (A).

Fraction (B) preferably has a comonomer content of more than 0.1 mol%, more preferably more than 0.3 mol%, most preferably more than 0.5 mol%.

Fraction (B) preferably has a comonomer content of below 2.0 mol%, more preferably below 1.5 mol%, most preferably below 1.0 mol%.

In one embodiment fraction (A) denotes a copolymer of ethylene and at least one alpha-olefin comonomer. The alpha-olefin conomoner preferably is selected from alpha-olefin conomoners with 3 to 12 carbon atoms, more preferably 4 to 8 carbon atoms. Suitable alpha-olefin comonomer species are 1-butene, 1-hexene and 1-octene. Thereby, 1-butene and 1-hexene are mostly preferred.

In this embodiment fraction (A) preferably has the lowest comonomer content. The comonomer content of fraction (A) thereby is preferably below 0.6 mol%, more preferably below 0.4 mol%, most preferably below 0.3 mol%.

The base resin preferably has a comonomer content of 0.1 to 3.0 mol%, more preferably of 0.4 to 2.0 mol% and most preferably of 0.6 to 1.5 mol%.

Optionally, the base resin comprises a prepolymer fraction, which adds to the amount of fraction (A). The prepolymer fraction preferably is present in the base resin in an amount of up to 7.5 wt%, more preferably in an amount of up to 5 wt% and most preferably in an amount of up to 3 wt% of the total base resin. The prepolymer fraction preferably is an ethylene homopolymer.

The base resin preferably has a complex viscosity at 0.05 rad/s $\eta^*_{0.05\,rad/s}$ of 100 to 450 kPa·s, more preferably of 175 to 400 kPa·s and most preferably 250 to 350 kPa·s.

The weight average molecular weight $M_w$ of the base resin is preferably equal to or higher than 200,000 g/mol, more preferably equal to or higher than 220,000 g/mol, most preferably equal to or higher than 250,000 g/mol, and preferably equal to or less than 290,000 g/mol, more preferably equal to or less than 280,000 g/mol, most preferably equal to or less than 270,000 g/mol.

The z average molecular weight $M_z$ of the base resin is preferably equal to or higher than 750,000 g/mol, more preferably equal to or higher than 850,000 g/mol, most preferably equal to or higher than 950,000 g/mol, preferably equal to or less than 1,700,000 g/mol, more preferably equal to or less than 1,500,000 g/mol, still more preferably equal to or less than 1,300,000 g/mol, and most preferably equal to or less than 1,200,000 g/mol.

The number average molecular weight $M_n$ of the base resin is preferably equal to or higher than 5,000 g/mol, more preferably equal to or higher than 6,500 g/mol, still more preferably equal to or higher than 8,000 g/mol, most preferably equal to or higher than 9,000 g/mol, and preferably equal to or less than 20,000 g/mol, more preferably equal to or less than 15,000 g/mol, most preferably equal to or less than 13,000 g/mol.

The base resin preferably has a molecular weight distribution which can be seen from the ratio of the weight average molecular weight and the number average molecular weight $M_w/M_n$ and from the ratio of the z average molecular weight and the weight average molecular weight $M_z/M_w$.

The composition preferably has a $M_w/M_n$ of equal to or less than 40, more preferably of equal to or less than 35, and most preferably of equal to or less than 30. The lower limit of the $M_w/M_n$ is preferably equal to or higher than 15, more preferably equal to or higher than 20.

This rather narrow molecular weight distribution of the base resin can also be seen from its polydispersity index PI preferably being equal to or higher than 0.5 Pa$^{-1}$, more preferably equal to or higher than 1.0 Pa$^{-1}$, and most preferably equal to or higher than 1.5 Pa$^{-1}$, and equal to or less than 4.5 Pa$^{-1}$, more preferably equal to or less than 3.0 Pa$^{-1}$, and most preferably equal to or less than 2.0 Pa$^{-1}$.

Further, the base resin preferably has a shear thinning index $SHI_{(2.7/210)}$, being the ratio of the complex viscosities at a shear stress of 2.7 kPa and 210 kPa, of equal to or higher than 10, more preferably equal to or higher than 17, and most preferably equal to or higher than 22, and equal to or less than 60, more preferably equal to or less than 45, and most preferably equal to or less than 35.

The density of the base resin is preferably equal to or higher than 925 kg/m$^3$, more preferably equal to or higher than 930 kg/m$^3$, more preferably equal to or higher than 933 kg/m$^3$, and most preferably equal to or higher than 935 kg/m$^3$. The upper limit of the density of the base resin is preferably equal to or less than 950 kg/m$^3$, more preferably equal to or less than 947 kg/m$^3$ and most preferably equal to or less than 945 kg/m$^3$.

The base resin preferably has a melt flow rate $MFR_5$ of equal to or less than 1.0 g/10 min, more preferably of equal to or less than 0.5 g/10 min, still more preferably of equal to or less than 0.3 g/10 min, and most preferably of equal to or less than 0.25 g/10 min. The lower limit of the melt flow rate $MFR_5$ is preferably equal to or higher than 0.01 g/10 min, more preferably of equal to or higher than 0.05 g/10 min and most preferably of equal to or higher than 0.07 g/10 min.

The base resin preferably has a melt flow rate $MFR_{21}$ of equal to or less than 10.0 g/10 min, more preferably of equal to or less than 7.0 g/10 min and most preferably of equal to or less than 5.0 g/10 min. The lower limit of the melt flow rate $MFR_{21}$ is preferably equal to or higher than 0.5 g/10 min, more preferably of equal to or higher than 1.0 g/10 min and most preferably of equal to or higher than 1.5 g/10 min.

Further, the base resin preferably has a flow rate ratio $FRR_{21/5}$ being the ratio of $MFR_{21}/MFR_5$ of 10 or more, more preferably 15 or more and most preferably of 20 or more.

The flow rate ratio $FRR_{21/5}$ is preferably 50 or less, more preferably 40 or less and most preferably of 35 or less.

The base resin preferably has a melting temperature $T_m$ of 110 °C to 140 °C, more preferably of 115 °C to 135 °C and most preferably of 120 °C to 130 °C.

The crystallization temperature $T_c$ of the base resin is preferably in the range of 100 °C to 120 °C, more preferably of 105 °C to 118 °C and most preferably of 110 °C to 115 °C.

In addition to the base resin, usual additives for utilization with polyolefins, such as pigments (e.g. carbon black), stabilizers (e.g. antioxidant agents), antacids and/or anti-UV's, antistatic agents and utilization agents (such as processing aid agents) may be present in the polyethylene composition. Preferably, the amount of these additives is 10 wt% or below, more preferably 8 wt% or below, most preferably 5 wt% or below, of the composition.

Preferably, the composition comprises carbon black in an amount of 8 wt% or below, more preferably in an amount of 1 to 4 wt%, of the total composition.

Further preferred, the amount of additives different from carbon black is 1 wt% or less, more preferably 0.5 wt% or less.

The polyethylene composition preferably has a comonomer content of 0.1 to 3.0 mol%, more preferably of 0.4 to 2.0 mol% and most preferably of 0.6 to 1.5 mol%.

Further, the polyethylene composition preferably has a melt flow rate $MFR_5$ of equal to or less than 1.0 g/10 min, more preferably of equal to or less than 0.5 g/10 min and most preferably of equal to or less than 0.3 g/10 min. The lower limit of the melt flow rate $MFR_5$ is preferably equal to or higher than 0.01 g/10 min, more preferably of equal to or higher than 0.05 g/10 min and most preferably of equal to or higher than 0.07 g/10 min.

The polyethylene composition preferably has a melt flow rate $MFR_{21}$ of equal to or less than 10.0 g/10 min, more preferably of equal to or less than 7.0 g/10 min and most preferably of equal to or less than 5.0 g/10 min. The lower limit of the melt flow rate $MFR_{21}$ is preferably equal to or higher than 0.5 g/10 min, more preferably of equal to or higher than 1.0 g/10 min and most preferably of equal to or higher than 1.5 g/10 min.

Further, the polyethylene composition preferably has a flow rate ratio $FRR_{21/5}$ being the ratio of $MFR_{21}/MFR_5$ of 10 or more, more preferably 15 or more and most preferably of 20 or more.

The flow rate ratio $FRR_{21/5}$ is preferably 50 or less, more preferably 40 or less and most preferably of 35 or less.

The polydispersity index PI of the polyethylene composition is preferably equal to or higher than 0.7 $Pa^{-1}$, more preferably equal to or higher than 1.2 $Pa^{-1}$, and most preferably equal to or higher than 1.8 $Pa^{-1}$, and equal to or less than 4.5 $Pa^{-1}$, more preferably equal to or less than 3.2 $Pa^{-1}$, and most preferably equal to or less than 2.5 $Pa^{-1}$.

Further, the polyethylene composition preferably has a complex viscosity at 0.05 rad/s $\eta^*_{0.05\ rad/s}$ of 100 to 450 kPa·s, more preferably of 170 to 350 kPa·s and most preferably 220 to 320 kPa·s.

The polyethylene composition according to the invention shows good mechanical properties in view of tensile properties and a high mechanical strength in form of pressure resistance when formed into a pipe. At the same time the polyethylene composition shows a very good behaviour in impact properties, especially at low and very low temperatures and a high slow crack resistance (PENT).

The composition preferably has a tensile modulus of at least 800 MPa, more preferably at least 900 MPa. The upper limit of the tensile modulus usually does not exceed 5000 MPa.

Further, the polyethylene composition preferably has a Charpy notched impact strength at 0°C of at least 20 $kJ/m^2$, more preferably of at least 30 $kJ/m^2$. The upper limit of the Charpy notched impact strength at 0°C usually does not exceed 500 $kJ/m^2$.

Further, the polyethylene composition preferably has a Charpy notched impact strength at -30°C of at least 10 $kJ/m^2$, more preferably of at least 15 $kJ/m^2$. The upper limit of the Charpy notched impact strength at -30°C usually does not exceed 500 $kJ/m^2$.

Further, the polyethylene composition preferably has a Charpy notched impact strength at -40°C of at least 10 $kJ/m^2$, more preferably of at least 13 $kJ/m^2$. The upper limit of the Charpy notched impact strength at -40°C usually does not exceed 500 $kJ/m^2$.

Still further, the polyethylene composition preferably has a slow crack growth resistance determined in a PENT test at 3.1 MPa and a temperature of 80°C of at least 1000 h, more preferably at least 4000 h. The upper limit of the slow crack growth resistance usually does not exceed 100000 h.

Still further, the polyethylene composition preferably has a slow crack growth resistance determined in a PENT test at 3.4 MPa and a temperature of 80°C of at least 1000 h, more preferably at least 4000 h. The upper limit of the slow crack growth resistance usually does not exceed 100000 h.

Further, the polyethylene composition preferably has a pressure resistance determined at 5.6 MPa and a temperature of 80°C of at least 1000 h, more preferably of at least 4000 h. The upper limit of the pressure resistance usually does not exceed 100000 h.

Further, the polyethylene composition preferably has a pressure resistance determined at 5.7 MPa and a temperature of 80°C of at least 1000 h, more preferably of at least 4000 h. The upper limit of the pressure resistance usually does not exceed 100000 h.

The polyethylene composition according to the present invention is preferably characterized by any of the above described embodiments and properties.

The invention is further related to a process for the production of a polyethylene composition according to any of the above described embodiments wherein the base resin is produced in a multi-stage process and after polymerization is separated in at least two fractions with different particle size in a sieving step.

The particle size is defined by the mesh-size of the sieve used in the sieving step. The particles which fall through the sieve have a particle size that is lower than the mesh-size. The particles which do not fall through the sieve have the particle size of the mesh-size or higher. E.g. particles falling through a mesh with a mesh size of 200 $\mu$m have a particle size of less than 200 $\mu$m, whereas particles not falling through this mesh have a particle size of 200 $\mu$m or higher.

Preferably, the base resin comprises two homo- or copolymer fractions (A) and (B) as described above.

Optionally, the base resin further comprises a prepolymer fraction as described above.

A multi-stage polymerization process denotes a process in which a polymer comprising two or more fractions is produced by polymerizing each of the at least two polymer fractions in a separate reaction stage, usually with different reaction conditions in each stage which comprises a polymerization catalyst. The polymerization is preferably followed by a compounding step.

It is preferred that the fractions (A) and (B) are polymerized at different stages of the multi-stage process in any order. It is preferred that the fractions (A) and (B) are polymerized in subsequent stages.

It is preferred that the base resin of the polyethylene composition according to the invention is polymerized in at least one slurry phase reactor and at least one gas phase reactor.

In a preferred embodiment fraction (A) is polymerized in a slurry phase reactor, preferably a loop reactor, and fraction (B) is polymerized a gas phase reactor in any order.

In any order denotes that there is no preferred order in which the subsequent polymerization stages of the multi-stage process are arranged.

In one preferred embodiment of the process according to the invention, fraction (A) is polymerized in the first reaction stage.

It is thereby preferred that fraction (B) is polymerized in the second reaction stage in the presence of fraction (A).

Preferably, the multistage process consists of a reaction stage conducted in a slurry phase reactor followed by a reaction stages conducted in a gas phase reactor. Optionally, the reaction stage conducted in the slurry phase reactor is thereby preceded by a prepolymerization stage.

It is preferred that fraction (A) is polymerized in a slurry phase reactor.

In slurry phase polymerisation the polymer particles formed in the polymerisation together with the catalyst fragmented and dispersed within the particles, are suspended in fluid hydrocarbon. The slurry phase is agitated to enable the transfer of reactants from the fluid into the particles. The polymerisation in the slurry phase reactor usually takes place in an inert diluent, typically a hydrocarbon diluent which is selected from a group comprising $C_3$ to $C_8$ hydrocarbons, such as methane, ethane, propane, n-butane, isobutane, hexanes such as n-hexane, heptanes, octanes or their mixtures. Preferably the diluent is a low boiling hydrocarbon having from 1 to 4 carbon atoms or a mixture of such hydrocarbons. An especially preferred diluent is propane, possibly containing minor amounts of methane, ethane and/or butane. The inert diluent can be the same or different in the different polymerisation steps. The ethylene content in the fluid phase of the slurry in the slurry phase reactor may be from 0.5 to 50 % by mole, preferably from 1 to 20 % by mole, and in particular from 2 to 10 % by mole. The benefit of having a high ethylene concentration is that the productivity of the catalyst is increased but the drawback is that more ethylene then needs to be recycled than if the concentration was lower.

The temperature in the slurry phase polymerisation is typically from 50 to 115 °C, preferably from 60 to 110 °C and in particular from 70 to 100 °C. The pressure is typically from 1 to 150 bar, preferably from 1 to 100 bar.

The slurry phase polymerisation may be conducted in any known reactor used for slurry phase polymerisation. Such reactors include a continuous stirred tank reactor and a loop reactor. It is especially preferred to conduct the polymerisation in a loop reactor. In such reactors the slurry is circulated with a high velocity along a closed pipe by using a circulation pump. Loop reactors are generally known in the art and examples are given, for instance, in US-A-4,582,816, US-A-3,405,109, US-A-3,324,093, EP-A-479 186 and US-A-5,391,654.

It is sometimes advantageous to conduct the slurry phase polymerisation above the critical temperature and pressure of the fluid mixture. Such operations are described in US-A-5,391,654. In such an operation the temperature is typically at least 85°C, preferably at least 90°C. Furthermore the temperature is typically not higher than 110°C, preferably not higher than 105°C. The pressure under these conditions is typically at least 40 bar, preferably at least 50 bar. Furthermore, the pressure is typically not higher than 150 bar, preferably not higher than 100 bar. In a preferred embodiment the slurry phase polymerization step, is carried out under supercritical conditions whereby the reaction temperature and reaction pressure are above equivalent critical points of the mixture formed by hydrocarbon medium, monomer, hydrogen and optional comonomer and the polymerization temperature is lower than the melting temperature of the polymer formed.

The slurry may be withdrawn from the slurry phase reactor either continuously or intermittently. A preferred way of intermittent withdrawal is the use of settling legs where the slurry is allowed to concentrate before withdrawing a batch of the concentrated slurry from the reactor. The use of settling legs is disclosed, amongst others, in US-A-3,374,211, US-A-3,242,150 and EP-A-1 310 295. Continuous withdrawal is disclosed, amongst others, in EP-A-891 990, EP-A-1 415 999, EP-A-1 591 460 and WO-A-2007/025640. The continuous withdrawal is advantageously combined with a suitable concentration method as disclosed in EP-A-1 415 999 and EP-A-1 591 460.

Settling legs are used to concentrate the slurry that is withdrawn from the reactor. The withdrawn stream thus contains more polymer per volume than the slurry within the reactor in average. This has the benefit that less liquid needs to be recycled back to the reactor and thereby the costs of the equipment are lower. In commercial scale plants the fluid which is withdrawn with the polymer evaporates in a flash tank and from there it is compressed with a compressor and recycled into the slurry phase reactor.

However, the settling legs withdraw the polymer intermittently. This causes the pressure and also other variables in the reactor to fluctuate with the period of the withdrawal. Also the withdrawal capacity is limited and depends on the size and number of settling legs. To overcome these disadvantages continuous withdrawal is often preferred.

The continuous withdrawal, on the other hand, has the problem that it typically withdraws the polymer in the same concentration as it is present within the reactor. To reduce the amount of hydrocarbons to be compressed the continuous outlet is advantageously combined with a suitable concentration device, such as a hydrocyclone or sieve, as disclosed in EP-A-1 415 999 and EP-A-1 591 460. The polymer-rich stream is then directed to a flash and the polymer-lean steam is returned directly into the reactor.

For adjusting the $MFR_2$ of the polyethylene fraction polymerised in the slurry phase reactor preferably hydrogen is introduced into the reactor.

The polyethylene fraction produced in the slurry phase reactor can be an ethylene homo- or copolymer fraction. If polymerising a copolymer, comonomers preferably are selected from the group comprising 1-butene, 1-hexene, 4-methyl-1-pentene, 1-octene or their mixtures, especially preferred are 1-butene and 1-hexene. In a preferred embodiment in the slurry phase reactor an ethylene homopolymer is polymerised so that no comonomer is fed to this reaction stage.

The residence time and the polymerisation temperature in the slurry phase reactor are adjusted as such as to polymerise an ethylene homo- or copolymer fraction typically in an amount of at least 35 wt%, more preferably at least 40 wt% and most preferably at least 45 wt% and not more than 65 wt%, more preferably not more than 60 wt% and most preferably not more than 55 wt% of the total polyethylene base resin.

The polymer fraction produced in the slurry phase reactor preferably is transferred to a gas phase reactor.

In a fluidised bed gas phase reactor an olefin is polymerised in the presence of a polymerisation catalyst in an upwards moving gas stream. The reactor typically contains a fluidised bed comprising the growing polymer particles containing the active catalyst located above a fluidisation grid.

The polymer bed is fluidised with the help of a fluidisation gas comprising the olefin monomer, eventually comonomer(s), eventually chain growth controllers or chain transfer agents, such as hydrogen, and eventually inert gas. The inert gas can thereby be the same or different as the inert gas used in the slurry phase reactor. The fluidisation gas is introduced into an inlet chamber at the bottom of the reactor. To make sure that the gas flow is uniformly distributed over the cross-sectional surface area of the inlet chamber the inlet pipe may be equipped with a flow dividing element as known in the art, e. g. US-A-4,933,149 and EP-A-684 871.

From the inlet chamber the gas flow is passed upwards through the fluidisation grid into the fluidised bed. The purpose of the fluidisation grid is to divide the gas flow evenly through the cross-sectional area of the bed. Sometimes the fluidisation grid may be arranged to establish a gas stream to sweep along the reactor walls, as disclosed in WO-A-2005/087261. Other types of fluidisation grids are disclosed, amongst others, in US-A-4,578,879, EP 600 414 and EP-A-721 798. An overview is given in Geldart and Bayens: The Design of Distributors for Gas-fluidised Beds, Powder Technology, Vol. 42, 1985.

The fluidisation gas passes through the fluidised bed. The superficial velocity of the fluidisation gas must be higher than the minimum fluidisation velocity of the particles contained in the fluidised bed, as otherwise no fluidisation would occur. On the other hand, the velocity of the gas should be lower than the onset velocity of pneumatic transport, as otherwise the whole bed would be entrained with the fluidisation gas. The minimum fluidisation velocity and the onset velocity of pneumatic transport can be calculated when the particle characteristics are known by using common engineering practice. An overview is given, amongst others, in Geldart: Gas Fluidisation Technology, J. Wiley & Sons, 1996.

When the fluidisation gas is contacted with the bed containing the active catalyst the reactive components of the gas, such as monomers and chain transfer agents, react in the presence of the catalyst to produce the polymer product. At the same time the gas is heated by the reaction heat.

The unreacted fluidisation gas is then removed from the top of the reactor, compressed and recycled into the inlet chamber of the reactor. Prior to the entry into the reactor fresh reactants are introduced into the fluidisation gas stream to compensate for the losses caused by the reaction and product withdrawal. It is generally known to analyse the composition of the fluidisation gas and introduce the gas components to keep the composition constant. The actual composition is determined by the desired properties of the product and the catalyst used in the polymerisation.

After that the gas is cooled in a heat exchanger to remove the reaction heat. The gas is cooled to a temperature which is lower than that of the bed to prevent the bed from being heated because of the reaction. It is possible to cool the gas to a temperature where a part of it condenses. When the liquid droplets enter the reaction zone they are vaporized. The vaporisation heat then contributes to the removal of the reaction heat. This kind of operation is called condensed mode and variations of it are disclosed, amongst others, in WO-A-2007/025640, US-A-4,543,399, EP-A-699 213, and WO-A-94/25495. It is also possible to add condensing agents into the recycle gas stream, as disclosed in EP-A-696 293. The condensing agents are non-polymerisable components, such as propane, n-pentane, isopentane, n-butane or isobutane, which are at least partially condensed in the cooler.

The polymeric product may be withdrawn from the gas phase reactor either continuously or intermittently. Combinations of these methods may also be used. Continuous withdrawal is disclosed, amongst others, in WO-A-00/29452. Intermittent withdrawal is disclosed, amongst others, in US-A-4,621,952, EP-A-188 125, EP-A-250 169 and EP-A-579 426.

The top part of the at least one gas phase reactor may include a so called disengagement zone. In such a zone the diameter of the reactor is increased to reduce the gas velocity and allow the particles that are carried from the bed with the fluidisation gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed levels.

Also antistatic agent(s) may be introduced into the at least one gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes alcohols.

The reactor may include a mechanical agitator to further facilitate mixing within the fluidised bed. An example of suitable agitator design is given in EP-A-707 513.

In a preferred embodiment the multi-stage process according to the invention comprises a gas phase reactor which succeeds one slurry phase reactor.

It is preferred that in the gas phase reactor fraction (B) of the polyethylene composition according to the invention is polymerized.

The temperature in the gas phase polymerisation in the gas phase reactor typically is at least 70°C, preferably at least 80°C. The temperature typically is not more than 105°C, preferably not more than 95°C. The pressure is typically at least 10 bar, preferably at least 15 bar but typically not more than 30 bar, preferably not more than 25 bar.

In the gas phase reactor the polymerisation conditions are selected as such that the polyethylene resin emerging from the first gas phase reactor, preferably consisting of fractions (A) and (B), optionally together with a prepolymer fraction, preferably has a $MFR_5$ of 0.01 to 5 g/10 min, more preferably 0.05 to 1.5 g/10 min, most preferably 0.1 to 1.0 g/10 min.

Further, the polyethylene resin emerging from the gas phase reactor, preferably consisting of fractions (A) and (B), optionally together with a prepolymer fraction, preferably has a density of 935 to 960 $kg/m^3$, more preferably 940 to 955 $kg/m^3$ and most preferably 943 to 953 $kg/m^3$.

For adjusting the melt flow rate of the polyethylene fraction polymerised in the gas phase reactor hydrogen may be introduced into the reactor.

In the gas phase reactor preferably an ethylene copolymer fraction is produced. The fluidisation gas stream thus comprises comonomers preferably selected from the group consisting of alpha-olefin conomoners with 3 to 12 carbon atoms, more preferably 4 to 8 carbon atoms. Suitable alpha-olefin comonomer species are 1-butene, 1-hexene and 1-octene. 1-butene and 1-hexene are mostly preferred. The comonomer used in the first gas phase reactor may be the same or different to that used in the slurry phase reactor. The comonomer feed is preferably adjusted to the ethylene feed in order to fulfil a comonomer to ethylene ratio of at least 1 to 20 mol/kmol, more preferably 3 to 15 mol/kmol, most preferably 5 to 10 mol/kmol.

The residence time and the polymerisation temperature in the first gas phase reactor are adjusted as such as to polymerise an ethylene copolymer fraction typically in an amount of at least 35 wt%, more preferably at least 40 wt% and most preferably at least 45 wt% and not more than 65 wt%, more preferably not more than 60 wt% and most preferably not more than 55 wt% of the total polyethylene resin.

As catalyst system any system of catalyst and optionally cocatalyst can be used suitable for polymerising polyethylene resins. Especially suitable are Ziegler-Natta and metallocene catalyst systems. In a preferred embodiment the polymerisation is carried out in the presence of a Ziegler-Natta catalyst.

Preferably, the catalyst is a supported Ziegler-Natta catalyst, more preferably containing a magnesium compound, an aluminium compound and a titanium compound supported on a particulate support.

The particulate support can be an inorganic oxide support, such as silica, alumina, titania, silica-alumina and silica-titania. Preferably, the support is silica.

The average particle size of the silica support can be typically from 10 to 100 $\mu$m. However, it has turned out that special advantages can be obtained if the support has an average particle size from 15 to 30 $\mu$m, preferably from 18 to 25 $\mu$m. Examples for suitable support materials are, for instance ES747JR produced and marketed by Ineos Silicas and SP9-491, produced and marketed by Grace.

The magnesium compound is preferably a reaction product of a magnesium dialkyl and an alcohol. The alcohol can be a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to the two alkyl groups, which may be the same or different. Butyl-octyl magnesium is one example of the preferred magnesium dialkyls.

The aluminium compound is preferably a chlorine containing aluminium alkyl. Especially preferred compounds are aluminium alkyl dichlorides and aluminium alkyl sesquischlorides.

The titanium compound is preferably a halogen containing, more preferably clorine containing titanium compound. Especially preferred is titanium tetrachloride.

The catalyst can be prepared by sequentially contacting the carrier with the above mentioned compounds, as described in EP-A-688794 or WO-A-99/51646. Alternatively, it can be prepared by first preparing a solution from the components and the contacting the solution with a carrier, as described in WO-A-01/55230.

The above mentioned solid catalyst component is contacted with an aluminium alkyl cocatalyst, preferably an aluminium dialkyl halide cocatalyst, which most preferably is an aluminium dialkyl chloride, after which it can be used for polymerization. The contacting of the solid catalyst component and the cocatalyst can either be conducted prior to introducing the catalyst into the polymerization reactor, or it can be conducted by introducing the two components separately into the polymerization reactor.

The catalyst system can be fed to any polymerisation stage but preferably is fed to the first polymerisation stage. Most preferably the catalyst system is only fed to the first polymerisation stage. The catalyst may be transferred into the polymerisation zone by any means known in the art. It is thus possible to suspend the catalyst in a diluent and maintain it as homogeneous slurry. Especially preferred is to use oil having a viscosity from 20 to 1500 mPa*s as diluent, as disclosed in WO-A-2006/063771. It is also possible to mix the catalyst with a viscous mixture of grease and oil and feed the resultant paste into the polymerisation zone. Still further, it is possible to let the catalyst settle and introduce portions of thus obtained catalyst mud into the polymerisation zone in a manner as disclosed, for instance, in EP-A- 428 054.

In one embodiment of the present invention the process may further comprise a pre-polymerisation step which precedes the polymerisation steps. The purpose of the pre-polymerisation is to polymerise a small amount of polymer onto the catalyst at a low temperature and/or a low monomer concentration. By pre-polymerisation it is possible to improve the performance of the catalyst in slurry and/or modify the properties of the final polymer. The pre-polymerisation step may be conducted in slurry or gas phase. Preferably the pre-polymerisation is conducted in slurry. Thus, the pre-polymerisation step may be conducted in a loop reactor. The pre-polymerisation is then preferably conducted in an inert diluent, typically a hydrocarbon diluent such as methane, ethane, propane, n-butane, isobutene, pentanes, hexanes, heptanes, octanes or their mixtures. Preferably the diluent is a low boiling hydrocarbon having from 1 to 4 carbon atoms or a mixture of such hydrocarbons. The most preferred diluent is propane.

The temperature in the pre-polymerisation step is typically from 0 °C to 90 °C., preferably from 20 °C to 80 °C, more preferably from 40 °C to 70 °C. The pressure is not critical and is typically from 1 bar to 150 bar, preferably from 10 bar to 100 bar.

The amount of monomer is typically such that from 0.1 grams to 1000 grams of monomer per one gram solid catalyst component is polymerised in the pre-polymerisation step. As the person skilled in the art knows, the catalyst particles recovered from a continuous pre-polymerisation reactor do not all contain the same amount of pre-polymer. Instead, each particle has its own characteristic amount which depends on the residence time of that particle in the pre-polymerisation reactor. As some particles remain in the reactor for a relatively long time and some for a relatively short time, then also the amount of pre-polymer on different particles is different and some individual particles may contain an amount of pre-polymer which is outside the above limits. However, the average amount of pre-polymer on the catalyst typically is within the limits specified above.

In addition to ethylene monomer it is possible to use one or more alpha-olefin comonomers in the pre-polymerisation step if desired. Suitable comonomers are, for example, 1-butene, 1-hexene, 4-methyl-1-pentene, 1-octene and their mixtures.

It is however preferred that in the pre-polymerization step an ethylene homopolymer prepolymer fraction is polymerized.

The molecular weight of the pre-polymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the pre-polymerisation step. However, where the solid catalyst component and the cocatalyst can be fed separately it is possible that only a part of cocatalyst is introduced into the pre-polymerisation stage and the remaining part into the subsequent polymerisation stages. Also in such cases it is necessary to introduce as much cocatalyst into the pre-polymerisation stage as necessary to obtain a sufficient polymerisation reaction.

The polyethylene composition of the invention is produced in a multi-stage process which further comprises a sieving step, wherein the polyethylene resin, which is typically obtained as a resin powder from the reactor, is separated in at least two fractions, preferably at least three fractions with different particle size. The upper limit of the fractions with different particle size usually does not exceed eight fractions due to cost considerations.

It is preferred that the process according to the invention comprises at least two sieving steps. The upper limit of the sieving usually does not exceed seven due to cost considerations.

In one of these sieving steps the base resin is preferably separated from a fraction which has a lower particle size. In another of these sieving steps the base resin is preferably separated from a fraction which has a higher particle size.

Preferably, in the sieving step(s) a fraction of the resin powder is separated from other fractions of the resin powder which has an particle size of equal to or higher than 200 $\mu$m, more preferably equal to or higher than 220 $\mu$m and most preferably of equal to or higher than 240 $\mu$m. The upper limit of the particle size of said fraction is preferably less than 500 $\mu$m, more preferably less than 460 $\mu$m and most preferably less than 430 $\mu$m. Preferably, said fraction separated in the sieving step(s) denotes the base resin as defined above.

After the sieving step the base resin is preferably extruded in an extruder and then pelletized to polymer pellets in a manner known in the art to form the polyethylene composition of the invention.

Optionally, additives or other polymer components can be added to the composition during the compounding step in an amount as described above. Preferably, the composition of the invention obtained from the reactor is compounded in the extruder together with additives in a manner known in the art.

The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In one embodiment, the extrusion step is carried out using feed rates of 100 kg/h to 500 kg/h, more preferably 150 kg/h to 300 kg/h.

The screw speed of the extruder is preferably 200 rpm to 500 rpm, more preferably 300 rpm to 450 rpm.

Preferably, in said extrusion step the SEI (specific energy input) of the extruder may be 100 kWh/ton to 400 kWh/ton, more preferably 200 kWh/ton to 300 kWh/ton.

The melt temperature in said extrusion step is preferably 200°C to 300°C, more preferably 230°C to 270°C.

Furthermore, the present invention relates to an article, preferably a pipe, comprising a polyethylene composition as described above or obtainable by a process as described above, and to the use of such a polyethylene composition for the production of an article, preferably a pipe.

The present invention is further illustrated by means of the following examples:

Examples:

1. Definitions

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_5$ of polyethylene is measured at a temperature 190 °C and a load of 5 kg, the $MFR_2$ of polyethylene at a temperature 190 °C and a load of 2.16 kg and the $MFR_{21}$ of polyethylene is measured at a temperature of 190 °C and a load of 21.6 kg. The quantity FRR (flow rate ratio) denotes the ratio of flow rates at different loads. Thus, $FRR_{21/5}$ denotes the ratio of $MFR_{21}/MFR_5$.

b) Density

Density of the polymer was measured according to ISO 1183-1:2004 Method A on compression moulded specimen prepared according to EN ISO 1872-2(February 2007) and is given in $kg/m^3$.

c) Comonomer content

13C-NMR analysis was used to determine the comonomer content of the samples. Samples were prepared by dissolving approximately 0.100 g of polymer and 2.5 ml of solvent in a 10 mm NMR tube. The solvent was a 90/10 mixture of 1,2,4-trichlorobenzene and benzene-d6. Samples were dissolved and homogenised by heating the tube and its contents at 150 C in a heating block.

The proton decoupled carbon-13 single pulse NMR spectra with NOE were recorded on a Joel ECX 400 MHz NMR spectrometer. The acquisition parameters used for the experiment included a flip-angle of 45 degrees, 4 dummy scans, 3000 transients and a 1.6 s acquisition time, a spectral width of 20kHz, temperature of 125 C, WALTZ decoupling and a relaxation delay of 6.0 s. The processing parameters used included zero-filling to 32k data points and apodisation using an exponential window function with in 1.0 Hz artificial line broadening followed by automatic zeroth and first order phase correction and automatic baseline correction.

Comonomer contents were calculated using integral ratios taken from the processed spectrum using the assignments described in JC. Randall's work (JMS - Rev. Macromol. Chem. Phys., C29(2&3), 201-317 (1989) using:

$$E = (\alpha B + \alpha H + \beta B + \beta H + \gamma B + \gamma H + \delta{++})/2$$

$$B = (\text{methine } B + 2B + 1B)/3$$

$$H = (\text{methine } H + 4H + 3H + 2H)/4$$

where methine is the CH branch site, alpha, beta, gamma the carbon sits adjacent to the CH i.e. CH, alpha, beta, gamma, delta. \delta++ is the bulk CH2 site and the 1,2,3 and 4 sites representing the various carbon sites along the branch with the methyl group being designated 1.

$$CE = 100\% * E/(E+B+H)$$

$$CB = 100\% * B/(E+B+H)$$

$$CH = 100\% * H/(E+B+H)$$

d) Rheological parameters

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at T 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad\qquad (1)$$

If the applied strain is within the linear viscoelastic regime, the resulting sinusoidal stress response can be given by

$$\sigma(t) = \sigma_0 \sin(\omega t + \delta) \qquad\qquad (2)$$

where

$\sigma_0$ and $\gamma_0$ are the stress and strain amplitudes, respectively
$\omega$ is the angular frequency
$\delta$ is the phase shift (loss angle between applied strain and stress response)
t is the time

Dynamic test results are typically expressed by means of several different rheological functions, namely the shear storage modulus G', the shear loss modulus, G", the complex shear modulus, G*, the complex shear viscosity, $\eta$*, the dynamic shear viscosity, $\eta$', the out-of-phase component of the complex shear viscosity $\eta$" and the loss tangent, tan $\delta$ which can be expressed as follows:

$$G' = \frac{\sigma_0}{\gamma_0}\cos\delta \ [Pa] \tag{3}$$

$$G' = \frac{\sigma_0}{\gamma_0}\sin\delta \ [Pa] \tag{4}$$

$$G^* = G' + iG'' \ [Pa] \tag{5}$$

$$\eta^* = \eta' - i\eta'' \ [Pa.s] \tag{6}$$

$$\eta' = \frac{G''}{\omega} \ [Pa.s] \tag{7}$$

$$\eta'' = \frac{G'}{\omega} \ [Pa.s] \tag{8}$$

The values of storage modulus (G'), loss modulus (G"), complex modulus (G*) and complex viscosity ($\eta^*$) were obtained as a function of frequency ($\omega$). Thereby, e.g. $\eta^*_{0.05\ rad/s}$ (eta$^*_{0.05\ rad/s}$) is used as abbreviation for the complex viscosity at the frequency of 0.05 rad/s.

Besides the above mentioned rheological functions one can also determine other rheological parameters such as the so-called elasticity index *EI(x)*. The elasticity index *Ei(x)* is the value of the storage modulus, G' determined for a value of the loss modulus, G" of x kPa and can be described by equation 10.

$$EI(x) = G' \ for \ (G'' = x \ kPa) \ [Pa] \tag{9}$$

For example, the EI(5kPa) is the defined by the value of the storage modulus G', determined for a value of G" equal to 5 kPa.

The determination of so-called Shear Thinning Indexes is done, as described in equation 10.

$$SHI(x/y) = \frac{Eta^* \ for \ (G^*=x \ kPa)}{Eta^* \ for \ (G^*=y \ kPa)} \ [Pa] \tag{10}$$

For example, the SHI$_{(2.7/210)}$ is defined by the value of the complex viscosity, in Pa·s, determined for a value of G* equal to 2.7 kPa, divided by the value of the complex viscosity, in Pa·s, determined for a value of G* equal to 210 kPa.

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "-*Interpolate y-values to x-values from parameter*" and the "*logarithmic interpolation type*" were applied.

The polydispersity index, *PI,* is defined by equation 11.

$$PI = \frac{10^5}{G'(\omega_{COP})}, \quad \omega_{COP} = \omega \ for \ (G' = G'') \tag{11}$$

where, $\omega_{COP}$ is the cross-over angular frequency, determined as the angular frequency for which the storage modulus, G' equals the loss modulus, G".

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

e) Molecular weight

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)} \tag{1}$$

$$M_w = \frac{\sum_{i=1}^{N}(A_i \times M_i)}{\sum A_i} \tag{2}$$

$$M_z = \frac{\sum_{i=1}^{N}(A_i \times M_i^2)}{\sum (A_i/M_i)} \tag{3}$$

For a constant elution volume interval $\Delta V_i$, where $A_i$ and $M_i$ are the chromatographic peak slice area and polyolefin molecular weight (MW).

A PolymerChar GPC instrument, equipped with infrared (IR) detector was used with 3 x Olexis and 1 x Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0.5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at 160°C under continuous gentle shaking in the autosampler of the GPC instrument.

f) Melting temperature, melting enthalpy, crystallization temperature

The melting temperature $T_m$, the melting enthalpy $H_m$, and the crystallisation temperature $T_c$ are measured with a Mettler TA820 differential scanning calorimetry device (DSC) on $3 \pm 0.5$ mg samples according to ISO 11357-3:1999. Crystallisation and melting temperatures as well as enthalpy are obtained during 10 °C/min cooling and heating scans between 30 °C and 225 °C. Melting and crystallisation temperatures are taken as the peaks of the endotherms and exotherms, while enthalpies are obtained from integrating said peaks.

g) Size of polymer powder particles

The polymer powder was sieved on a sieve machine with a throughput of 5 - 500 kg/h and a fines range 50 - 500 μm at Schuttgutveredelung NOLL GmbH, Aufbereitungstechnologie NOLL GmbH, D-86399 Bobingen. Thereby different fractions of the polymer powder were separated according to their particle size: Thereby, fraction 1 has a particle size of lower than 125 μm, fraction 2 has a particle size in the range of 125 μm to lower than 250 μm, fraction 3 has a particle size of 250 μm to lower than 400 μm and fraction 4 has a particle size of 400 μm or more.

h) Pressure test on un-notched pipes (PT)

The pressure test on un-notched 32 mm SDR 11 pipes having a length of 450 mm is carried out in water-inside and water-outside environment according to ISO 1167-1:2006. End caps of type A were used. The time to failure is determined in hours. A hoop stress of 5.6 MPa, 5.7 MPa, 5.9 MPa or 6.0 MPa and a temperature of 80 °C was applied.

i) Slow crack growth test (PENT)

The slow crack propagation resistance is determined according to the PENT test procedure (ASTM F 1473-01 or ISO16241-2005) at different stresses of 2.8 MPa, 3.1 MPa and 3.4 MPa each at a temperature of 80 °C in terms of the number of hours the polyethylene withstands a certain stress at a certain temperature before failure. A rectangular specimen (Thickness 10 mm; width 25 mm, length 50 mm) that is notched on one side is subjected to constant static tensile load. In other words, one end of the rectangular specimen is fixed in position while a load (dead weight) is hung from the other end. The primary purpose of the notch is to introduce a triaxial stress state at the notch tip to ensure a brittle slow crack growth fracture mode. The outcome of this test is the time to failure or the time it takes for the two halves of the specimen to fully separate or reach a separation of 0.5 inches, whichever comes first. The specimens were milled from plaques of 10 mm thickness prepared by compression molding according to ISO 293:2004 using the conditions defined in chapter 3.3 of ISO 1872-2:2007.

j) Charpy notched impact strength

Charpy impact strength was determined according to ISO179/1eA:2000 on V-notched samples of $80*10*4 \text{ mm}^3$ at 0 °C (Charpy impact strength (0 °C)), -30 °C (Charpy impact strength (-30 °C)) and -40°C (Charpy impact strength (-40°C). Samples were cut from plaques of 4 mm thickness prepared by compression molding according to ISO 293:2004 using the conditions defined in chapter 3.3 of ISO 1872-2:2007.

k) Tensile modulus

As a measure for stiffness, the tensile modulus (E-modulus) of the compositions was measured at 23 °C on compression molded specimens according to ISO 527-2:1993. The specimens (1B type) were cut from plaques of 4 mm thickness prepared by compression molding according to ISO 293:2004 using the conditions defined in chapter 3.3 of ISO 1872-2:2007. The modulus was measured at a speed of 1 mm/min.

2. Examples

a) Polymerization of the polyethylene powder

The polyethylene powder used in the present example section was polymerized using the same catalyst and the same polymerization conditions as for Example A of WO-A-00/22040, resulting in a bimodal ethylene/1-butene copolymer with a 1-butene content of 0.7 mol%.

b) Sieving step

The polyethylene powder of step a) emerging from the gas phase reactor was sieved as described above in the chapter Definitions under item g) so that four fractions of the polyethylene powder were separated according to the particle size of the base resin. Thereby, fraction 1 has a particle size of lower than 125 $\mu$m, fraction 2 has a particle size in the range of 125 $\mu$m to lower than 250 $\mu$m, fraction 3 has a particle size of 250 $\mu$m to lower than 400 $\mu$m and fraction 4 has a particle size of 400 $\mu$m or more.

The properties of the four fractions of the sieved polyethylene powder and of the unsieved polyethylene powder are listed in Table 1.

Table 1: Properties of the four fractions of the sieved polyethylene powder and of the unsieved polyethylene powder

|  | Fraction 1 | Fraction 2 | Fraction 3 | Fraction 4 | Unsieved |
|---|---|---|---|---|---|
| Particle size [$\mu$m] | <125 | 125-<250 | 250-<400 | $\geq$400 | --- |
| Amount of Base resin [wt%] | 9 | 46 | 35 | 10 | --- |
| MFR$_5$ [g/10 min] | 9.4 | 2.1 | 0.1 | 0.04 | 0.3 |

(continued)

| | Fraction 1 | Fraction 2 | Fraction 3 | Fraction 4 | Unsieved |
|---|---|---|---|---|---|
| MFR$_{21}$ [g/10 min] | 210 | 61.9 | 2.6 | 0.7 | 10.5 |
| FRR$_{21/5}$ | 22.3 | 29.9 | 26.1 | 16.5 | 31.8 |
| Density [kg/m$^3$] | 961 | 954 | 941 | 934 | 947 |
| Comononer content [mol%] | 0.3 | 0.5 | 0.9 | 1.1 | 0.7 |
| Tm [°C] | 130.8 | 130.2 | 127.1 | 125.8 | 130.2 |
| T$_c$[°C] | 118.1 | 117.9 | 113 | 112.8 | 113.1 |
| M$_n$ [kg/mol] | 6 | 6 | 11 | 13 | 7 |
| M$_w$ [kg/mol] | 131 | 159 | 265 | 273 | 184 |
| M$_z$ [kg/mol] | 913 | 972 | 1041 | 1046 | 921 |
| MWD (M$_w$/M$_n$) | 22.8 | 26.8 | 24.2 | 21.6 | 26.3 |
| PI [Pa$^{-1}$] | 7.3 | 4.7 | 1.8 | 1.2 | 2.8 |
| Eta*$_{0.05 rad/s}$ [kPa·s] | 24.6 | 71.2 | 301.3 | 513.8 | 171.3 |
| SHI$_{2.7/210}$ | 181 | 130 | 29 | 18 | 61 |

c) Preparation of the polyethylene composition

Fraction 2 and 3 of the sieved polyethylene powder as well as the unsieved polyethylene powder were stabilised with 0.22 wt% of Irganox B225 and 0.15wt% Ca-stearate and 5.75 wt% Carbon Black masterbatch and then extruded to pellets in a co-rotating twin screw extruder ZSK40 (manufactured by Werner & Pfleiderer) so that the throughput was 28-46 kg/h and the screw speed was 130 rpm. The Carbon Black concentration in the masterbatch was 40 wt%

Fraction 1 was disregarded as almost only consisting of the LMW fraction because it has a very high melt flow rate (MFR$_5$) and density resulting in a very soft polyethylene material which will not resist in any pressure tests. Further, fraction 4 as well as combined fractions 3 and 4 were disregarded as almost only consisting of the HMW fraction because these fractions were not processable due to their very low melt flow rate (MFR$_5$).

d) Pipe Extrusion

For the pressure test the compositions were extruded to 32 x 3mm pipes. The extrusion was performed on a Battenfeld Uniex 1-45- 25 D extruder, Baujahr 1987 and a 3-zone screw. Extrusion conditions were as follows. Melt temperature Tm: 210°C, screw speed 40 rpm, output 32 kg/h. The following temperature profile was applied for pipe extrusion:

| | Inlet | Cylinder | | | Pipe Head | | | | | Die |
|---|---|---|---|---|---|---|---|---|---|---|
| Zone | 0 | 1 | 2 | 3 | 1 | 2 | 3 | 4 | 5 | 6 |
| [°C] | 47 | 175 | 180 | 185 | 195 | 195 | 195 | 195 | 195 | 195 |

The properties of the compounded compositions and the pipes are shown in Table 2.

Table 2: Properties of the compounded compositions of Fractions 2 and 3 and the unsieved base resin

| | Fraction 2 | Fraction 3 | Unsieved |
|---|---|---|---|
| MFR$_5$ [g/10 min] | 0.9 | 0.1 | 0.2 |
| MFR$_{21}$ [g/10 min] | 12.0 | 2.8 | 8.5 |
| Density [kg/m$^3$] | 966 | 955 | 959 |
| Tensile modulus [MPa] | 1310 | 946 | 1067 |

(continued)

| | Fraction 2 | Fraction 3 | Unsieved |
|---|---|---|---|
| Charpy NIS, 0°C [kJ/m$^2$] | 5 | 37 | 20 |
| Charpy NIS, -30°C [kJ/m$^2$] | 5 | 22 | 9 |
| Charpy NIS, -40°C [kJ/m$^2$] | 4 | 15 | 9 |
| PENT, 2.8 MPa, 80°C [h] | 33 | n.d. | 800-4000 |
| PENT, 3.1 MPa, 80°C [h] | 15 | >5000 | n.d. |
| PENT, 3.4 MPa, 80°C [h] | 8 | >4500 | n.d. |
| PT, 5.6 MPa, 80°C [h] | n.d. | >5000 | 166 |
| PT, 5.7 MPa, 80°C [h] | 342 | >5000 | 113 |
| PT, 5.9 MPa, 80°C [h] | 88 | n.d. | n.d. |
| PT, 6.0 MPa, 80°C [h] | 25 | n.d. | n.d. |
| n.d. = not determined | | | |

The PT and the PENT results show the average of two measurements.

The composition made of Fraction 3 shows improved properties as regards tensile modulus, impact properties, especially at very low temperatures, and slow crack growth resistance both in the PENT test and the un-notched pipe test.

**Claims**

1.   A multimodal polyethylene composition comprising a base resin which comprises a low molecular weight ethylene homo- or copolymer fraction (A) and a high molecular weight ethylene homo- or copolymer fraction (B), wherein fraction (A) has a lower average molecular weight as fraction (B), **characterized in that** the base resin has a weight average molecular weight (Mw) of from 190,000 g/mol to 300,000 g/mol, determined by GPC according to ISO 16014-4:2003 and ASTM D 6474-99, a complex viscosity at 0.05 rad/s ($\eta^*_{0.05\ rad/s}$) of 75 to 500 kPa·s and a shear thinning index, being the ratio of the complex viscosities at a shear stress 2.7 kPa and at a shear stress of 210 kPa, ($SHI_{2.7/210}$) of 10 to 60, $\eta^*_{0.05\ rad/s}$ and $SHI_{2.7/210}$ being determined by dynamic shear measurements according to ISO 6721-1 and ISO 6721-10, and
the composition has a melt flow rate at a load of 21.6 kg ($MFR_{21}$) of equal to or less than 7.0 g/10 min, determined according to ISO 1133 at a temperature of 190°C and a load of 21.6 kg.

2.   The polyethylene composition according to claim 1, wherein the base resin has a density of 925 to 950 kg/m$^3$, determined according to ISO 1183-1:2004 Method A on compression moulded specimen prepared according to EN ISO 1872-2.

3.   The polyethylene composition according to claims 1 or 2, wherein the base resin has a polydispersity index (PI) of 0.5 - 4.5 Pa$^{-1}$, determined by dynamic shear measurements according to ISO 6721-1 and ISO 6721-10.

4.   The polyethylene composition according to any of the preceding claims, wherein the low molecular weight fraction (A) is an ethylene homopolymer and the high molecular weight fraction (B) is a copolymer of ethylene and one or more alpha-olefin comonomers having from 4 to 12 carbon atoms.

5.   The polyethylene composition according to any of the preceding claims, wherein the comonomer content of the base resin is from 0.1 to 3.0 mol%.

6.   The polyethylene composition according to any of the preceding claims, wherein the composition has a melt flow rate at a load of 5 kg ($MFR_5$) of 0.01 to 0.5 g/10 min, determined according to ISO 1133 at a temperature of 190°C and a load of 5 kg.

7.   The polyethylene composition according to any of the preceding claims, wherein the composition has a flow rate ratio (FRR$_{21/5}$), being the ratio of MFR$_{21}$ to MFR$_5$, of 10 to 50.

8. The polyethylene composition according to any of the preceding claims, wherein the composition has a tensile modulus of at least 800 MPa, determined according to ISO 527-2:1993 on compression moulded specimens prepared according to ISO 293:2004.

9. The polyethylene composition according to any of the preceding claims, wherein the composition has at least one of the following properties: a Charpy notched impact strength at 0°C of at least 20 kJ/m$^2$, a Charpy notched impact strength at -30°C of at least 10 kJ/m$^2$, and/or a Charpy notched impact strength at -40°C of at least 10 kJ/m$^2$, determined according to ISO 179/1eA:2000 on compression moulded specimens prepared according to ISO 293:2004.

10. The polyethylene composition according to any of the preceding claims, wherein the composition has a slow crack growth resistance determined in a PENT test at 3.1 MPa and a temperature of 80°C of at least 1000 h, and/or a slow crack growth resistance determined in a PENT test at 3.4 MPa and a temperature of 80°C of at least 1000 h, determined according to ASTM F 1473-01 or ISO 16241-2005 on compression moulded specimens prepared according to ISO 293:2004.

11. The polyethylene composition according to any of the preceding claims, wherein the composition has a pressure resistance determined at 5.6 MPa and a temperature of 80°C of at least 1000 h, and/or a pressure resistance determined at 5.7 MPa and a temperature of 80°C of at least 1000 h, determined according to ISO 1167-1:2006 on 32 mm SDR 11 pipes.

12. A process for preparing the polyethylene composition according to any of the preceding claims comprising the steps of polymerizing the base resin in a multi-stage process, wherein the low molecular weight fraction (A) and the high molecular weight fraction (B) are polymerized in subsequent polymerization stages, and separating the base resin in at least two fractions with different average particle size in a sieving step.

13. The process of claim 12, wherein after the sieving step a fraction having a particle size of 200 μm to less than 500 μm is selected and preferably is compounded to form the polyethylene composition.

14. An article comprising the polyethylene composition according to any of claims 1 to 11.

15. Use of the polyethylene composition according to any of claims 1 to 11 for the production of an article.

**Patentansprüche**

1. Multimodale Polyethylenzusammensetzung, umfassend ein Basisharz, das eine Ethylenhomo- oder -copolymerfraktion mit geringem Molekulargewicht (A) und eine Ethylenhomo- oder -copolymerfraktion mit hohem Molekulargewicht (B) umfasst, wobei die Fraktion (A) ein geringeres durchschnittliches Molekulargewicht als die Fraktion (B) aufweist, **dadurch gekennzeichnet, dass**
das Basisharz ein Gewichtsmittel des Molekulargewichts (Mw) von 190.000 g/mol bis 300.000 g/mol, bestimmt mittels GPC gemäß ISO 16014-4:2003 und ASTM D 6474-99, eine komplexe Viskosität bei 0,05 rad/s ($\eta^*_{0.05\ rad/s}$) von 57 bis 500 kPa · s und einen Strukturviskositätsindex (SHI$_{2,7/210}$) von 10 bis 60 aufweist, der das Verhältnis der komplexen Viskositäten bei einer Schubspannung von 2,7 kPa und einer Schubspannung von 210 kPa ist, wobei $\eta^*_{0.05\ rad/s}$ und SHI$_{2,7/210}$ mittels dynamischen Schermessungen gemäß ISO 6721-1 und ISO 6721-10 bestimmt werden, und
die Zusammensetzung einen Schmelzfußindex bei einer Last von 21,6 kg (MFR$_{21}$) von gleich zu oder weniger als 7,0 g/10 min aufweist, bestimmt gemäß ISO 1133 bei einer Temperatur von 190 °C und einer Last von 21,6 kg.

2. Polyethylenzusammensetzung nach Anspruch 1, wobei das Basisharz eine Dichte von 925 bis 950 kg/m$^3$ aufweist, bestimmt gemäß ISO 1183-1:2004 Methode A an formgepressten Proben, die gemäß EN ISO 1872-2 hergestellt wurden.

3. Polyethylenzusammensetzung nach Anspruch 1 oder 2, wobei das Basisharz einen Polydispersitätsindex (PI) von 0,5 - 4,5 Pa$^{-1}$ aufweist, bestimmt mittels dynamischen Schermessungen gemäß ISO 6721-1 und ISO 6721-10.

**4.** Polyethylenzusammensetzung nach einem der vorhergehenden Ansprüche, wobei die Fraktion mit geringem Molekulargewicht (A) ein Ethylenhomopolymer und die Fraktion mit hohem Molekulargewicht (B) ein Copolymer aus Ethylen und ein oder mehreren alpha-Olefincomonomeren ist, die 4 bis 12 Kohlenstoffatome aufweisen.

**5.** Polyethylenzusammensetzung nach einem der vorhergehenden Ansprüche, wobei der Comonomergehalt des Basisharzes 0,1 bis 3,0 Mol-% beträgt.

**6.** Polyethylenzusammensetzung nach einem der vorhergehenden Ansprüche, wobei die Zusammensetzung einen Schmelzbeschlussindex bei einer Last von 5 kg ($MFR_5$) von 0,01 bis 0,5 g/10 min aufweist, bestimmt gemäß ISO 1133 bei einer Temperatur von 190 °C und einer Last von 5 kg.

**7.** Polyethylenzusammensetzung nach einem der vorhergehenden Ansprüche, wobei die Zusammensetzung ein Schmelzflussverhältnis ($FRR_{21/5}$) von 10 bis 50 aufweist, das das Verhältnis des $MFR_{21}$ zu dem $MFR_5$ ist.

**8.** Polyethylenzusammensetzung nach einem der vorhergehenden Ansprüche, wobei die Zusammensetzung einen Zugmodul von mindestens 800 MPa aufweist, bestimmt gemäß ISO 527-2:1993 an formgepressten Proben, die gemäß ISO 293:2004 hergestellt wurden.

**9.** Polyethylenzusammensetzung nach einem der vorhergehenden Ansprüche, wobei die Zusammensetzung mindestens eine der folgenden Eigenschaften aufweist: eine Charpy-Kerbschlagzähigkeit bei 0 °C von mindestens 20 $kJ/m^2$, eine Charpy-Kerbschlagzähigkeit bei -30 °C von mindestens 10 $kJ/m^2$ und/oder eine Charpy-Kerbschlagzähigkeit bei -40 °C von mindestens 10 $kJ/m^2$, bestimmt gemäß ISO 179/1eA:2000 an formgepressten Proben, die gemäß ISO 293:2004 hergestellt wurden.

**10.** Polyethylenzusammensetzung nach einem der vorhergehenden Ansprüche, wobei die Zusammensetzung eine Beständigkeit gegenüber langsamen Risswachstum, bestimmt in einem PENT-Test bei 3,1 MPa und einer Temperatur von 80 °C, von mindestens 1000 h aufweist und/oder eine Beständigkeit gegenüber langsamen Risswachstum, bestimmt in einem PENT-Test bei 3,4 MPa und einer Temperatur von 80 °C, von mindestens 1000 h aufweist, bestimmt gemäß ASTM F 1473-01 oder ISO 16241-2005 an formgepressten Proben, die gemäß ISO 293:2004 hergestellt wurden.

**11.** Polyethylenzusammensetzung nach einem der vorhergehenden Ansprüche, wobei die Zusammensetzung eine Druckbeständigkeit, bestimmt bei 5,6 MPa und einer Temperatur von 80 °C, von mindestens 1000 h Stunden aufweist und/oder einen Druckbeständigkeit, bestimmt bei 5,7 MPa und einer Temperatur von 80 °C, von mindestens 1000 h aufweist, bestimmt gemäß ISO 1167-1:2006 an 32 mm SDR 11 Rohren.

**12.** Verfahren zum Herstellen der Polyethylenzusammensetzung nach einem der vorhergehenden Ansprüche, umfassend die Schritte des Polymerisierens von dem Basisharz in einem mehrstufigen Verfahren, wobei die Fraktion mit geringem Molekulargewicht (A) und die Fraktion mit hohem Molekulargewicht (B) in aufeinanderfolgenden Polymerisationsstufen polymerisiert werden, und des Trennens von dem Basisharz in einem Siebeschritt in mindestens zwei Fraktionen mit unterschiedlicher Durchschnittspartikelgröße.

**13.** Verfahren nach Anspruch 12, wobei nach dem Siebeschritt eine Fraktion, die eine Partikelgröße von 200 $\mu$m bis weniger als 500 $\mu$m aufweist, ausgewählt und vorzugsweise compoundiert wird, um die Polyethylenzusammensetzung zu bilden.

**14.** Artikel, umfassend die Polyethylenzusammensetzung nach einem der Ansprüche 1 bis 11.

**15.** Verwendung der Polyethylenzusammensetzung nach einem der Ansprüche 1 bis 11 zur Herstellung eines Artikels.

**Revendications**

**1.** Composition de polyéthylène multimodale comprenant une résine de base qui comprend une fraction d'homo- ou co-polymère d'éthylène de faible masse moléculaire (A) et une fraction d'homo- ou co-polymère d'éthylène de masse moléculaire élevée (B), dans laquelle la fraction (A) a une masse moléculaire moyenne inférieure à celle de la fraction (B), **caractérisée en ce que**
la résine de base a une masse moléculaire moyenne en masse (Mw), déterminée par GPC conformément aux normes ISO 16014-4:2003 et ASTM D 6474-99, de 190 000 g/mol à 300 000 g/mol, une viscosité complexe à 0,05 rad/s ($\eta^*_{0,05\ rad/s}$) de 75 à 500 kPa.s et un indice de fluidification par cisaillement, qui est le rapport des viscosités complexes à une contrainte de cisaillement de 2,7 kPa et à une contrainte de cisaillement de 210 kPa ($SHI_{2,7/210}$), de 10 à 60, $\eta^*_{0,05\ rad/s}$ et $SHI_{2,7/210}$ étant déterminés par des mesures de cisaillement dynamique conformément aux normes ISO 6721-1 et ISO 6721-10, et

la composition a un indice de fluage sous une charge de 21,6 kg ($MFR_{21}$), déterminé conformément à la norme ISO 1133 à une température de 190°C et sous une charge de 21,6 kg, égal ou inférieur à 7,0 g/10 min.

2. Composition de polyéthylène selon la revendication 1, dans laquelle la résine de base a une masse volumique, déterminée conformément à la norme ISO 1183-1:2004, Méthode A, sur un échantillon moulé par compression préparé conformément à la norme EN ISO 1872-2, de 925 à 950 kg/m³.

3. Composition de polyéthylène selon la revendication 1 ou 2, dans laquelle la résine de base a un indice de polydispersité (PI), déterminé par des mesures de cisaillement dynamique conformément aux normes ISO 6721-1 et ISO 6721-10, de 0,5 à 4,5 Pa$^{-1}$.

4. Composition de polyéthylène selon l'une quelconque des revendications précédentes, dans laquelle la fraction de faible masse moléculaire (A) est un homopolymère d'éthylène et la fraction de masse moléculaire élevée (B) est un copolymère d'éthylène et d'un ou plusieurs comonomères alpha-oléfines ayant de 4 à 12 atomes de carbone.

5. Composition de polyéthylène selon l'une quelconque des revendications précédentes, dans laquelle la teneur en comonomères de la résine de base est de 0,1 à 3,0 % en moles.

6. Composition de polyéthylène selon l'une quelconque des revendications précédentes, laquelle composition a un indice de fluage sous une charge de 5 kg ($MFR_5$), déterminé conformément à la norme ISO 1133 à une température de 190°C et sous une charge de 5 kg, de 0,01 à 0,5 g/10 min.

7. Composition de polyéthylène selon l'une quelconque des revendications précédentes, laquelle composition a un rapport d'indice de fluage ($FRR_{21/5}$), qui est le rapport du $MFR_{21}$ au $MFR_5$, de 10 à 50.

8. Composition de polyéthylène selon l'une quelconque des revendications précédentes, laquelle composition a un module en traction, déterminé conformément à la norme ISO 527-2:1993 sur des échantillons moulés par compression préparés conformément à la norme ISO 293:2004, d'au moins 800 MPa.

9. Composition de polyéthylène selon l'une quelconque des revendications précédentes, laquelle composition a au moins l'une des propriétés suivantes : une résistance au choc Charpy sur barreau entaillé à 0°C d'au moins 20 kJ/m², une résistance au choc Charpy sur barreau entaillé à -30°C d'au moins 10 kJ/m², et/ou une résistance au choc Charpy sur barreau entaillé à -40°C d'au moins 10 kJ/m², ces résistances étant déterminées conformément à la norme ISO 179/1eA:2000 sur des échantillons moulés par compression préparés conformément à la norme ISO 293:2004.

10. Composition de polyéthylène selon l'une quelconque des revendications précédentes, laquelle composition a une résistance à la croissance lente de craquelures, déterminée dans un test PENT sous 3,1 MPa et à une température de 80°C, d'au moins 1000 h, et/ou une résistance à la croissance lente de craquelures, déterminée dans un test PENT sous 3,4 MPa et à une température de 80°C, d'au moins 1000 h, ces résistances étant déterminées conformément à la norme ASTM F 1473-01 ou ISO 16241-2005 sur des échantillons moulés par compression préparés conformément à la norme ISO 293:2004.

11. Composition de polyéthylène selon l'une quelconque des revendications précédentes, laquelle composition a une résistance à la pression, déterminée sous 5,6 MPa et à une température de 80°C, d'au moins 1000 h, et/ou une résistance à la pression, déterminée sous 5,7 MPa et à une température de 80°C, d'au moins 1000 h, ces résistances étant déterminées conformément à la norme ISO 1167-1:2006 sur des tuyaux SDR 11 de 32 mm.

12. Procédé pour préparer la composition de polyéthylène de l'une quelconque des revendications précédentes, comprenant les étapes de polymérisation de la résine de base dans un procédé à étapes multiples, dans lequel la fraction de faible masse moléculaire (A) et la fraction de masse moléculaire élevée (B) sont polymérisées dans des étapes de polymérisation subséquentes, et de séparation de la résine de base en au moins deux fractions ayant des granulométries moyennes différentes dans une étape de tamisage.

**13.** Procédé selon la revendication 12, dans lequel, après l'étape de tamisage, une fraction ayant une granulométrie allant de 200 $\mu$m à moins de 500 $\mu$m est sélectionnée et de préférence est combinée pour former la composition de polyéthylène.

**14.** Article comprenant la composition de polyéthylène de l'une quelconque des revendications 1 à 11.

**15.** Utilisation de la composition de polyéthylène de l'une quelconque des revendications 1 à 11 pour la production d'un article.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0739937 A
- EP 1920179 A
- US 6770341 B
- US 7345113 B
- EP 1460105 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- US 4933149 A
- EP 684871 A
- WO 2005087261 A
- US 4578879 A
- EP 600414 A
- EP 721798 A
- US 4543399 A
- EP 699213 A
- WO 9425495 A
- EP 696293 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- EP 688794 A
- WO 9951646 A
- WO 0155230 A
- WO 2006063771 A
- EP 428054 A
- WO 9619503 A
- WO 9632420 A
- WO 0022040 A

### Non-patent literature cited in the description

- **SCHEIRS ; BÖHM ; BOOT ; LEEVERS.** PE100 Resins for Pipe Applications. *TRIP,* 1996, vol. 4 (12), 408-415
- **B. HAGSTRÖM.** Prediction of melt flow rate (MFR) of bimodal polyethylenes based on MFR of their components. *Conference on Polymer Processing (The Polymer Processing Society), Extended Abstracts and Final Programme, Gothenburg,* 19 August 1997, vol. 4, 13
- **GELDART ; BAYENS.** The Design of Distributors for Gas-fluidised Beds. *Powder Technology,* 1985, vol. 42
- **GELDART.** Gas Fluidisation Technology. J. Wiley & Sons, 1996
- *JMS - Rev. Macromol. Chem. Phys.,* 1989, vol. C29 (2&3), 201-317
- **HEINO, E.L. ; LEHTINEN, A. ; TANNER J. ; SEPPÄLÄ, J. ; NESTE OY, PORVOO.** Rheological characterization of polyethylene fractions. *Finland, Theor. Appl. Rheol., Proc. Int. Congr. Rheol, 11th,* 1992, vol. 1, 360-362
- **HEINO, E.L.** The influence of molecular structure on some rheological properties of polyethylene. *Borealis Polymers Oy, Porvoo, Finland, Annual Transactions of the Nordic Rheology Society,* 1995
- *Pure & Appl. Chem.,* 1998, vol. 70 (3), 701-754